# EUROPEAN PATENT SPECIFICATION

(11) **EP 3 135 092 B1**
(45) Date of publication and mention of the grant of the patent: **21.02.2018**
(21) Application number: 15182735.9
(22) Date of filing: 27.08.2015
(51) Int. Cl.: A01D 34/416

(54) **AN IMPROVED POWER TOOL AND A ROTATION TRANSMISSION MECHANISM FOR A POWER TOOL**
VERBESSERTES ELEKTROWERKZEUG UND EIN DREHUNGSÜBERTRAGUNGSMECHANISMUS FÜR EIN ELEKTROWERKZEUG
OUTIL DE PUISSANCE AMÉLIORÉ ET MÉCANISME DE TRANSMISSION DE ROTATION POUR UN OUTIL ÉLECTRIQUE

(43) Date of publication of application: 01.03.2017
(73) Proprietor: TTI (Macao Commercial Offshore) Limited, Macao (MO)
(72) Inventor: FERRELL, James, Elberton, GA 30635 (US)
(74) Representative: Stevenson-Hill, Jack Patrick

(56) References cited:
- EP-A1- 0 365 703
- EP-A2- 2 754 536
- US-A- 4 122 601
- US-A- 5 954 144

## Description

### TECHNICAL FIELD

The present invention relates to an improved power tool and particularly, although not exclusively, to a power tool that has a rotation control arrangement.

### BACKGROUND

There are many different types of power tools that are available for end users to purchase and use on a work piece or work surface. These power tools are often designed and built with a motor, either electric or gasoline, to power the power tool. Connected to this motor may also be a tool head designed to interact or manipulate with a work surface or work piece.

Despite the simplicity of these components of a power tool, various problems can cause these components to fail or operate inefficiently during the operation of the power tool. In turn, the normal lifespan of each of these components can be significantly reduced, affecting the performance and durability of the power tool.

EP 0365703 A1 discloses a hand-held machine. US 4,122,601 A discloses a portable, separable grass and bush cutter.

### SUMMARY OF THE PRESENT INVENTION

In accordance with a first aspect of the present invention, there is provided an improved power tool according to claim 1. The power tool comprises: a rotating tool head arranged to apply a rotating force to a work surface, wherein the rotating tool head is driven by a motor via a rotation control arrangement arranged to control the rotating tool head to rotate in one direction only.

In an embodiment of the first aspect, the rotation control arrangement is further arranged to transmit rotational drive from the motor to the rotating tool head.

In an embodiment of the first aspect, the rotation control arrangement receives the rotational drive from the motor via a drive shaft arranged to rotatably communicate with the motor.

In an embodiment of the first aspect, the drive shaft is a flexible drive shaft.

In an embodiment of the first aspect, the rotation control arrangement includes a one way bearing mechanism.

In an embodiment of the first aspect, the one way bearing mechanism is in a locked position when transmitting the rotational drive from the shaft to the rotating tool head.

In an embodiment of the first aspect, when upon the rotating tool head is subjected to an external force, the external force is resisted from being transmitted towards the shaft by the rotation control arrangement.

In an embodiment of the first aspect, the external force is applied to the rotating tool head in a direction opposite to the rotation of the rotating tool head.

In an embodiment of the first aspect, the external force is dissipated by the rotation control arrangement.

In an embodiment of the first aspect, the power tool is a line trimmer.

In accordance with a second aspect of the present invention, there is provided a rotation transmission mechanism for a power tool according to claim 9. The rotation transmission mechanism comprises:
- a drive receiving interface arranged to receive a rotational drive delivering shaft connected to a motor operable to provide rotational drive to the power tool; and
- a drive directing interface arranged to direct the rotational drive to a tool head; wherein the drive receiving interface and the drive directing interface are connected together with a rotation control mechanism arranged to control the rotation of the drive receiving interface or the drive directing interface in a single direction only.

In an embodiment of the second aspect, the rotation control mechanism is a one way bearing.

In an embodiment of the second aspect, the drive directing interface is arranged to be engaged to the drive receiving interface to transmit the rotational drive from the motor to the tool head.

In an embodiment of the second aspect, the drive directing interface is arranged to disengage from the drive receiving interface when rotated in an opposite direction to the rotational drive.

In an embodiment of the second aspect, when upon the drive directing interface is subjected to any rotational force in an opposite direction to the rotational drive, the rotation control mechanism is arranged to prevent the rotational force in the opposite direction from being transmitted towards the rotational drive delivering shaft.

In an embodiment of the second aspect, the rotation control mechanism is arranged to dissipate the rotational force in the opposite direction.

In an embodiment of the second aspect, the rotation mechanism is for a line trimmer.

In accordance with a third aspect of the present invention, there is provided a method for managing back chatter for a line trimmer in accordance with claim 14. The method comprises the steps of:
- transmitting rotation drive from a motor to a tool head via a rotational control mechanism arranged to rotate in one direction only.

In an embodiment of the third aspect, the rotational control mechanism is a one way bearing.

In an embodiment of the third aspect, the one way bearing is arranged to lock so as to transmit rotation from the motor to the tool head and is further arranged to resist opposing rotation forces experienced by the tool head.

### BRIEF DESCRIPTION OF THE DRAWINGS

Embodiments of the present invention will now be described, by way of example, with reference to the accompanying drawings in which:
Figure 1 is a perspective view of a power tool in accordance with one embodiment of the present invention;
Figure 2 is a close up perspective view of a rotating tool head in accordance with the power tool of Figure 1;
Figure 3 is a side view of the rotating tool head in accordance with the power tool of Figure 1;
Figure 4 is an exploded view of the rotating tool head in accordance with the power tool of Figure 1;
Figure 5 is a rear view of a rotation control arrangement of the rotating tool head of Figure 4;
Figure 6 is a top perspective view of the rotation control arrangement of Figure 5 having been coupled to the central hub of the rotating tool head of Figure 3; and
Figure 7(i) and 7(ii) are block diagrams illustrating the application of torque forces from the motor to the central head during normal operation of the power tool of Figure 1 and when an opposite force is applied to the central head.

### DETAILED DESCRIPTION OF THE PREFERRED EMBODIMENT

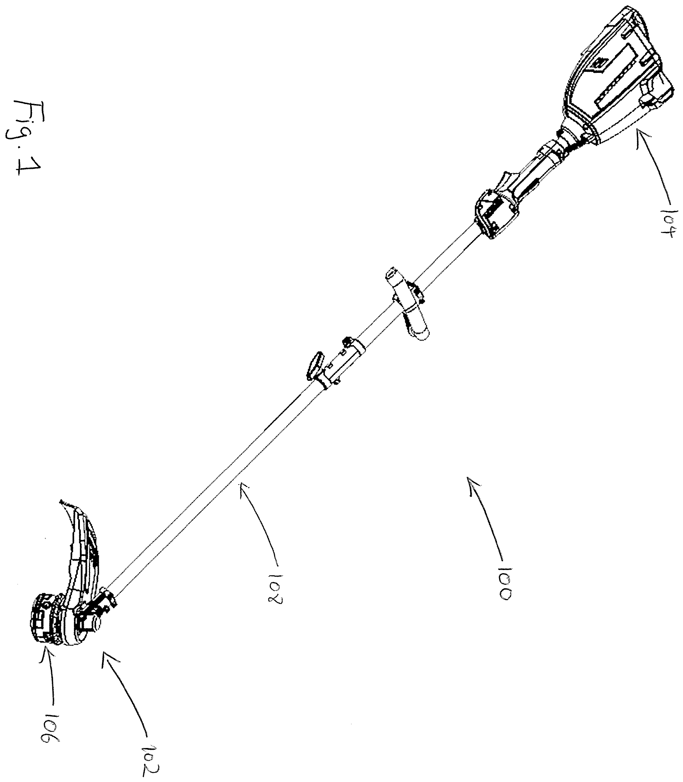

Referring to Figure 1, there is illustrated an improved power tool 100 comprising: a rotating tool head 102 arranged to apply a rotating force to a work surface, wherein the rotating tool head is driven by a motor 104 via a rotation control arrangement arranged to control the rotating tool head 102 to rotate in one direction only.

In this embodiment, the improved power tool 100 shown is a string trimmer (also known as a line trimmer). However, as a person skilled in the art would appreciate, the improved power tool 100 can be other types of power tools that have a tool head that rotates so as to perform work. These power tools may include drills, trimmers, saws, washers, cutters, diggers, edgers, mowers, shredders, polishers, winch or the like.

In this example, the line trimmer 100 has a rotating tool head 102 that includes one or more flexible lines protruding from a central hub 106. The trimmer 100 is arranged to operate by spinning either parts or all of the rotating tool head 102 and in turn, when the user directs the trimmer 100 towards a working surface, the flexible lines that are protruding from the central hub 106 would impact vegetation (e.g. grass) or any other objects adjacent to the working surface, resulting in the vegetation or any other protruding objects of suitable characteristics to be cut by the flexible line.

As shown in Figure 1, the rotating tool head 102 may be driven by a motor 104. The motor 104 can either be an electric motor, or a gas or gasoline operated motor, although preferably, as shown in this embodiment of the invention, the motor 104 is an electric motor. This motor 104 is controlled by a user to rotate and in turn to direct a rotating driving force to the rotating tool head 102 such that the tool head can apply this rotating force to the work surface. The motor 104 may be connected to a shaft which is also rotated when the motor is in motion. In turn, when the shaft rotates, the shaft will direct the rotational drive towards the rotating tool head 102 so as to spin the central hub 106 and the flexible lines that protrude from the hub 106.

Preferably, the shaft is flexible and may be made from a generally flexible or torsionally elastic material such as an elastic metal cable or spring cable. Whilst the shaft may not necessarily have to be flexible and in some examples of the invention, the shaft may not be flexible at all, a flexible shaft will allow rotational drive to be directed to different directions without the need for additional gearing or steering mechanisms. In turn, the shaft housing 108 may be curved or bent so as to enhance the ergonomics or sizing of the line trimmer 100. In addition, as it is shown in the example embodiment of Figure 1, the flexibility of the shaft can allow for rotational drive to be directed towards the rotating tool head 102 by directing the flexible shaft into the rotating tool head 102 through a joint between the shaft housing 108 and the rotating tool head 102 without the need for additional gearing to change the direction of the rotation drive from the shaft to the rotating tool head 102.

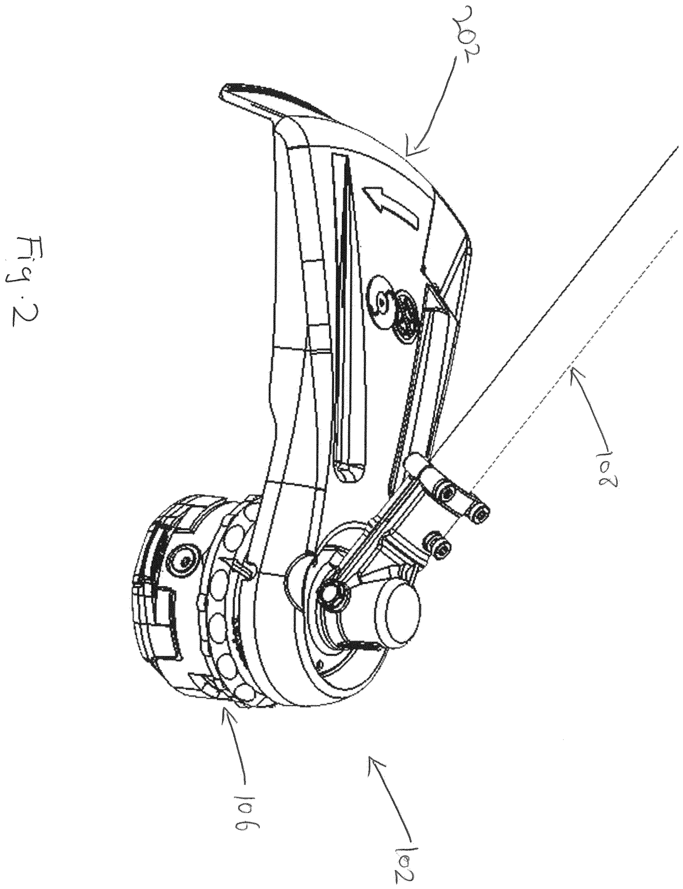

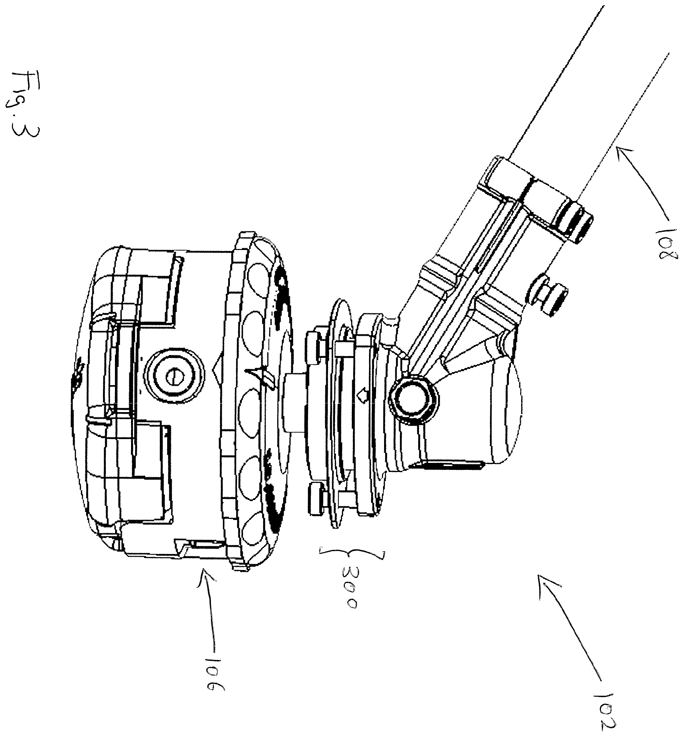

With reference to Figures 2, 3, 4, 5 and 6, a close up of a rotating tool head 102 of one embodiment of the present invention is shown. In this embodiment, the flexible shaft, (which is not shown as it is enveloped within the shaft housing 108) is arranged to rotate during operation as it is driven by the motor 104. In turn, the shaft then transmits this rotation drive towards a rotation control arrangement 300 which is arranged to control the rotation of the central hub 106 of the rotating tool head 102 so as to allow the central hub 106 to rotate in one direction only. Also shown here in these diagrams is a cutting guard 202 which shields the user from debris generated from the operation of the trimmer 100. The cutting guard 202 does not rotate with the central hub 106.

In this example embodiment, the rotation control arrangement 300 may operate as a rotation transmission mechanism for a power tool comprising: a drive receiving interface arranged to receive a rotational drive delivering shaft connected to a motor operable to provide rotational drive to the power tool; and a drive directing interface arranged to direct the rotational drive to a tool head; wherein the drive receiving interface and the drive directing interface are connected together with a rotation control mechanism arranged to control the rotation of the drive receiving interface or the drive directing interface in a single direction only. In this example, the rotation transmission mechanism effectively works as a transmission interface between the shaft and the central hub 106 so as to transmit rotational drive from the shaft to the central hub 106 as part of the operation of the power tool. The drive receiving interface may be an engaging plate which is arranged to engage with the shaft, whilst the drive directing interface may be a secondary plate which engages with the central hub 106. In between these plates is a drive transfer mechanism which transmits the rotation drive between the drive receiving interface and the drive directing interface.

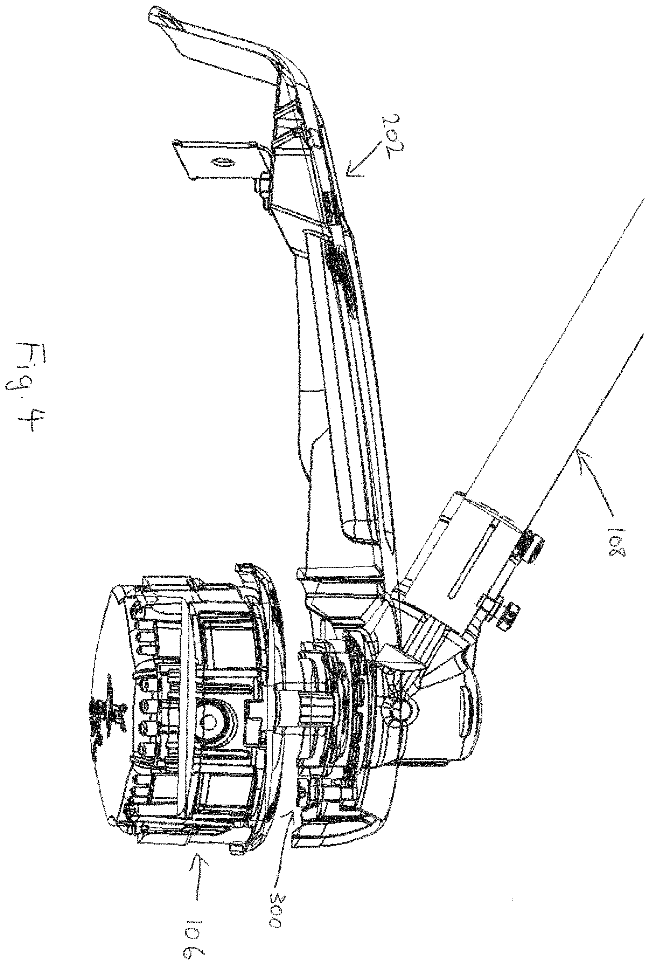

Preferably, the rotation control arrangement 300 includes a one way bearing arrangement which physically forces the central hub 106 to rotate in one direction only. As shown in Figures 4, 5 and 6, the one way bearing 300 is arranged to transmit the rotational drive from the shaft to the central hub 106 in a single direction. In turn, the one way bearing 300 also physically restricts the rotation of the central hub 106 in the opposite direction.

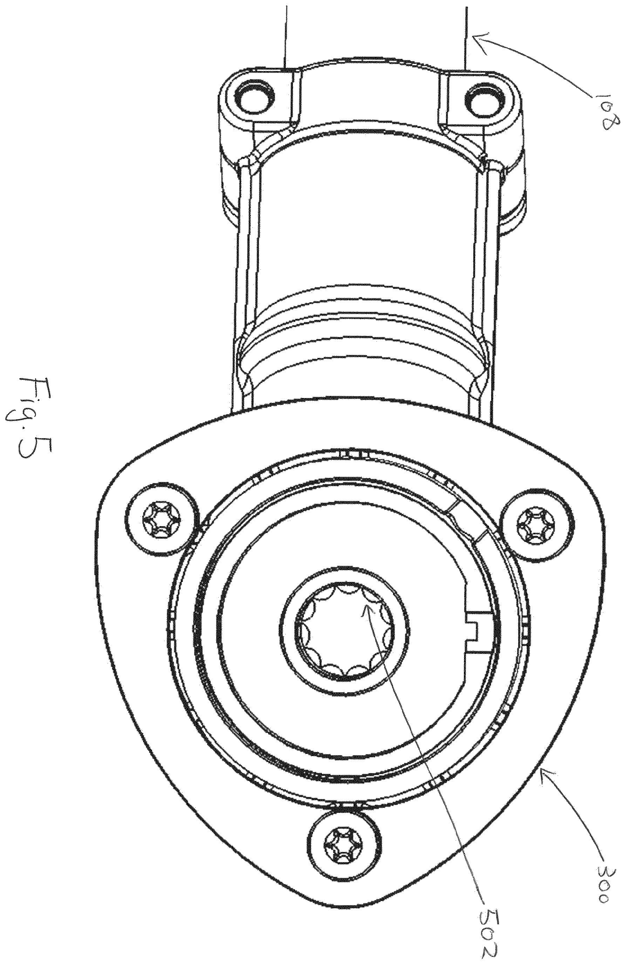

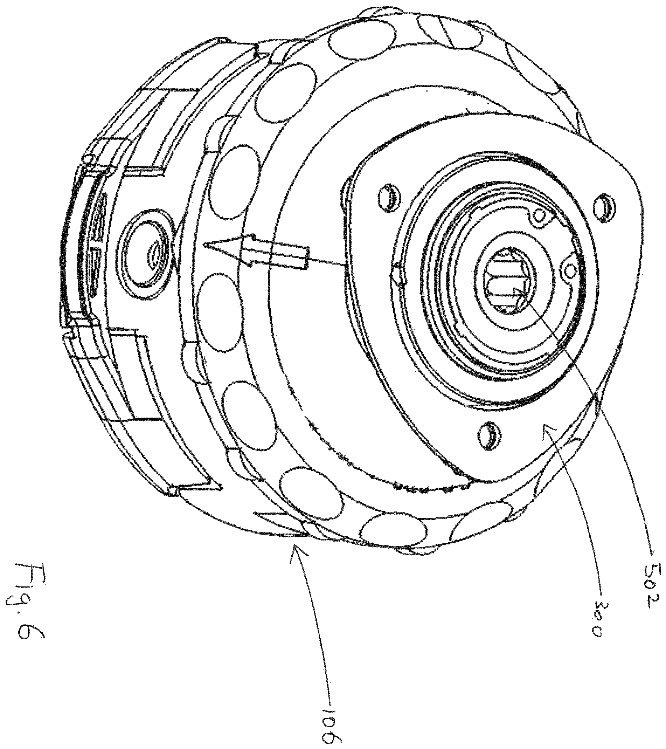

As shown in Figures 5 and 6, the one way bearing 300 includes a plurality of rollers 502 which are arranged to make contact with the rotating shaft when the shaft is connected to the one way bearing 300. When the rotating shaft is rotated, the rollers 502 are locked against an outer race of the one way bearing 300 by a mechanical arrangement that may include a sprag and thus allowing the rotation drive from the shaft to drive the central hub 106 which may be engaged to the outer race of the one way bearing 300. Thus in this example embodiment, assuming the motor 104 rotates in a clock wise direction, the one way bearing 300 is locked in the clock wise direction with each of the rollers 502 being locked to the outer race of the bearing so as to transfer the rotation drive from the motor 104 to the outer race of the bearing 300. In turn, the outer race of the bearing may then be engaged to the central hub 106 and thus rotating the central hub 106 with the rotation of the bearing 300.

It is important to note that in this preferred embodiment, a one way bearing 300 is used for the rotation control arrangement. However, other single-direction mechanisms such as a torque convertor, clutch arrangement, ratcheting mechanism or a cam locking system may also be used. A one way bearing 300 has the advantage of being relatively low costs and easy to replace as the bearing will have little or minimal serviceable parts.

During operation of the line trimmer 100, the central hub 106, which is rotating as it is driven by the motor 104, will move one or more protruding lines extending from the central hub 106 to impact with vegetation or other objects so as to cut the vegetation or objects. However, when upon the line trimmer 100 is directed by a user towards a hard object or surface, such as a tree trunk, metal pole or the like or if the central hub 106 impacts a ground surface, an impact force may be directed onto the central hub 106 itself. In turn, this impact force may slow the line trimmer 100 due to the impact or friction created between the central hub 106 and the ground surface.

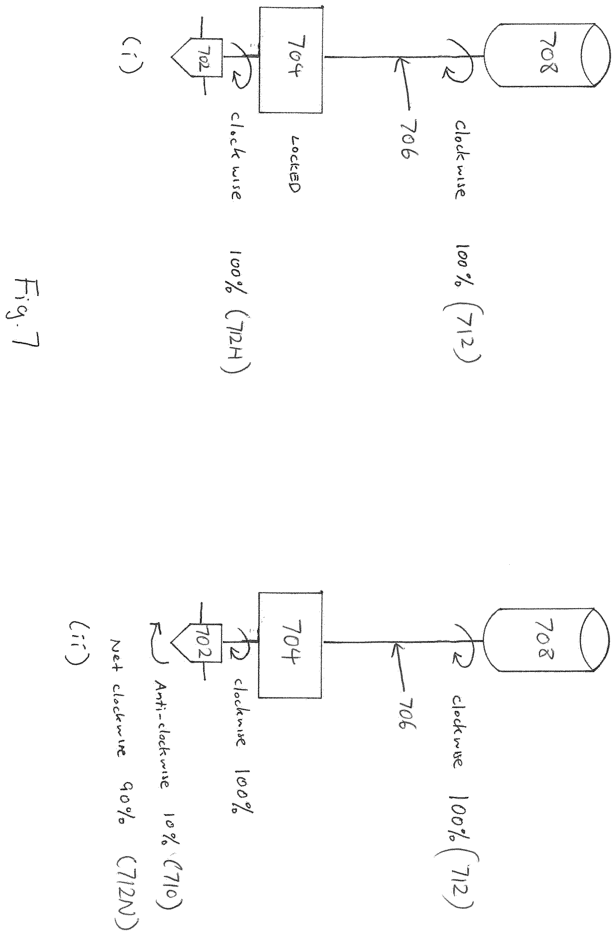

As shown with reference to Figure 7(i) and 7(ii), the impact force that may be experienced in these situations by the trimmer will, at the physical level, cause a force in the opposite direction of the rotation of the central hub. If the central hub 702 was rotating in a clockwise direction during its operation, the impact force will effectively apply a rotational force 710 in the anti-clockwise direction.

For line trimmers that do not have a rotation control arrangement as described above, this impact force will be transmitted towards the shaft and the motor. In trimmers with a flexible shaft, the shaft will wind up, or become torsionally charged due to the rotational speed differences between the motor and the central hub. One possible result of this wind up or torsional charge is that in electric line trimmers, the wind up or torsional charge will move the rotors of the motor in an opposite direction, against the normal drive of the electric motor. In trimmers which have an electronically controlled direct current (DC) brushless motor, the rotor of the motor may suddenly be out of phase to the electronic control. This is known as back chatter which in turn will reduce the efficiency and effectiveness of the motor. In trimmers which have gasoline engines, the negative torque created by this impact pressure may affect the efficiency of the engine or potentially stall the engine if the torque is sufficient enough.

With respect to the present embodiments of the invention, the rotation control arrangement which is disposed in between the shaft and the central hub is arranged to physically stop any rotation in the opposite direction. In turn, the rotation control arrangement is able to minimize or reduce any negative rotational force that may be experienced by the central hub from being passed towards the shaft. Thus the possibility of winding by the flexible shaft or the experiences of back chatter by the motor is significantly reduced when the central hub impacts a hard object.

As illustrated in Figure 7(i), during normal operation of an embodiment of the invention, the torque (712) delivered by the motor 708 to the shaft is at 100% clockwise. As the shaft 706 is connected to the central hub 702 via a one way bearing 704 in a locked position, the torque (712H) at the central hub 702 is also at 100% clockwise, ignoring any torque loss due to friction.

As shown in Figure 7(ii), when upon the central head 702 of the power tool impacts a surface or hard object, a force (710) in the opposite direction (anti-clockwise) is created as a force that resist the rotation in the clockwise direction. In this example, the anti-clockwise torque (710) is at 10% thus created a net torque (712N) at the head to be 90% in the clockwise position.

However, the rotation control arrangement 704, which in this example is a one way bearing, is disposed between the shaft 706 and the central head 702, and has the characteristic of only allowing rotation in the clockwise direction whilst freewheeling in the anti-clockwise direction. The anti-clockwise torque (710) of 10% is minimized from being transferred towards the shaft 706. Accordingly, as this anti-clockwise torque (710) does not travel upwards pass the one way bearing, the winding of the shaft is thus avoided. Instead, this anti-clockwise torque is likely to be dissipated by the freewheeling of the one way bearing or is absorbed by the components of the bearing 704. In this way, the usage of the rotation control arrangement 704 may provide a method for managing back chatter for a power tool, such as a line trimmer, by transmitting rotation drive from a motor to a tool head via a rotational control mechanism arranged to rotate in one direction only.

It will be appreciated by persons skilled in the art that numerous variations and/or modifications may be made to the invention as shown in the specific embodiments without departing from the scope of the invention as claimed. The present embodiments are, therefore, to be considered in all respects as illustrative and not restrictive.

Any reference to prior art contained herein is not to be taken as an admission that the information is common general knowledge, unless otherwise indicated.

## Claims

1. An improved power tool (100) comprising:
a rotating tool head (102; 702) arranged to apply a rotating force to a work surface and, in turn, impact an object adjacent to the work surface, wherein the rotating tool head (102; 702) is driven by a motor (104; 708) via a rotation control arrangement (300; 704) arranged to control the rotating tool head (102; 702) to rotate in one direction only, despite an impact force being applied to the rotating tool head (102; 702) by said object.

2. An improved power tool in accordance with claim 1, wherein the rotation control arrangement (300; 704) is further arranged to transmit rotational drive from the motor (104; 708) to the rotating tool head (102; 702).

3. An improved power tool in accordance with claim 2, wherein the rotation control arrangement (300; 704) receives the rotational drive from the motor via a drive shaft (706) arranged to rotatably communicate with the motor.

4. An improved power tool in accordance with claim 3, wherein the drive shaft (706) is a flexible drive shaft.

5. An improved power tool in accordance with any one of the preceding claims, wherein the rotation control arrangement (300; 704) includes a one way bearing mechanism; and optionally, wherein the one way bearing mechanism is in a locked position when transmitting the rotational drive from the drive shaft (706) to the rotating tool head (102; 702).

6. An improved power tool in accordance with claim 3, 4 or 5 when dependent upon claim 3, wherein upon the rotating tool head (102; 702) being subjected to an external force, the external force is resisted from being transmitted towards the drive shaft (706) by the rotation control arrangement (300; 704).

7. An improved power tool in accordance with claim 6, wherein the external force is applied to the rotating tool head (102; 702) in a direction opposite to the rotation of the rotating tool head (102; 702); and, optionally, wherein the external force is dissipated by the rotation control arrangement (300; 704).

8. An improved power tool in accordance with any one of the preceding claims, wherein the power tool (100) is a line trimmer.

9. A rotation transmission mechanism for a power tool (100) comprising:
- a drive receiving interface arranged to receive a rotational drive delivering shaft (706) connected to a motor (104; 708) operable to provide rotational drive to the power tool (100); and
- a drive directing interface arranged to direct the rotational drive to a rotating tool head (102; 702) arranged to apply a rotating force to a work surface and, in turn, impact an object adjacent to the work surface; wherein the drive receiving interface and the drive directing interface are connected together with a rotation control mechanism (300; 704) arranged to control the rotation of the drive receiving interface or the drive directing interface in a single direction only, despite an impact force being applied to the rotating tool head (102; 702) by said object.

10. A rotation transmission mechanism for a power tool in accordance with claim 9, wherein the rotation control mechanism (300; 704) is a one way bearing.

11. A rotation transmission mechanism for a power tool in accordance with claim 10, wherein the drive directing interface is arranged to be engaged to the drive receiving interface to transmit the rotational drive from the motor (104; 708) to the rotating tool head (102; 702); and optionally, wherein the drive directing interface is arranged to disengage from the drive receiving interface when rotated in an opposite direction to the rotational drive.

12. A rotation transmission mechanism for a power tool in accordance with any one of claims 9 to 11, wherein upon the drive directing interface being subjected to any rotational force in an opposite direction to the rotational drive, the rotation control mechanism (300; 704) is arranged to prevent the rotational force in the opposite direction from being transmitted towards the rotational drive delivering shaft; and, optionally, wherein the rotation control mechanism (300; 704) is arranged to dissipate the rotational force in the opposite direction.

13. A rotation transmission mechanism for a power tool in accordance with any one of claims 9 to 12, wherein the rotation transmission mechanism is for a line trimmer.

14. A method of managing back chatter for a line trimmer (100) comprising the steps of:
- transmitting rotation drive from a motor (104; 708) to a rotating tool head (102; 702) via a rotation control mechanism (300; 704) arranged to rotate in one direction only, wherein the rotating tool head (102; 702) is arranged to apply a rotating force to a work surface and, in turn, impact an object adjacent to the work surface, and wherein the rotation control mechanism (300; 704) is arranged to control the rotating tool head (102; 702) to rotate in one direction only despite an impact force being applied to the rotating tool head (102; 702) by said object.

15. A method of managing back chatter for a line trimmer (100) in accordance with claim 14, wherein the rotation control mechanism (300; 704) is a one way bearing; and, optionally, wherein the one way bearing is arranged to lock so as to transmit rotation from the motor (104; 708) to the rotating tool head (105; 702) and is further arranged to resist opposing rotation forces experienced by the tool head (102; 702).

## Patentansprüche

1. Verbessertes Elektrowerkzeug (100), Folgendes beinhaltend:
einen rotierenden Werkzeugkopf (102; 702), angeordnet, um eine Drehkraft auf eine Arbeitsfläche zu applizieren und wiederum, ein der Arbeitsfläche benachbartes Objekt zu beeinflussen, wobei der rotierende Werkzeugkopf (102; 702) durch einen Motor (104; 708) über eine Rotationssteuerungsanordnung (300; 704) angetrieben wird, welche angeordnet ist, den rotierenden Werkzeugkopf (102; 702) zur Rotation in nur eine Richtung zu steuern, trotz einer Beeinflussungskraft, die durch den Gegenstand auf den rotierenden Werkzeugkopf (102; 702) appliziert wird.

2. Verbessertes Elektrowerkzeug nach Anspruch 1, bei welchem die Rotationssteuerungsanordnung (300; 704) zudem angeordnet ist, einen Drehantrieb vom Motor (104; 708) auf den rotierenden Werkzeugkopf (102; 702) zu übertragen.

3. Verbessertes Elektrowerkzeug nach Anspruch 2, bei welchem die Rotationssteuerungsanordnung (300; 704) den Drehantrieb vom Motor über einen Antriebsschaft (706) aufnimmt, welcher angeordnet ist, um drehbar mit dem Motor zu kommunizieren.

4. Verbessertes Elektrowerkzeug nach Anspruch 3, bei welchem der Antriebsschaft (706) ein flexibler Antriebsschaft ist.

5. Verbessertes Elektrowerkzeug nach einem der vorhergehenden Ansprüche, bei welchem die Rotationssteuerungsanordnung (300; 704) einen Einrichtungslagermechanismus einschließt; und bei welchem wahlweise der Einrichtungslagermechanismus in einer verriegelten Position ist, wenn er den Drehantrieb vom Antriebsschaft (706) auf den rotierenden Werkzeugkopf (102; 702) überträgt.

6. Verbessertes Elektrowerkzeug nach Anspruch 3, 4 oder 5 in Abhängigkeit von Anspruch 3, bei welchem, während der rotierende Werkzeugkopf (102; 702) einer externen Kraft unterworfen wird, die externe Kraft an der Übertragung auf den Antriebsschaft (706) durch die Rotationssteuerungsanordnung (300; 704) gehindert wird.

7. Verbessertes Elektrowerkzeug nach Anspruch 6, bei welchem die externe Kraft auf den rotierenden Werkzeugkopf (102; 702) in einer der Rotation des rotierenden Werkzeugkopfs (102; 702) entgegengesetzten Richtung appliziert wird; und bei welchem wahlweise die externe Kraft durch die Rotationssteuerungsanordnung (300; 704) abgebaut wird.

8. Verbessertes Elektrowerkzeug nach einem der vorhergehenden Ansprüche, bei welchem das Elektrowerkzeug (100) ein Band-Trimmer ist.

9. Rotationsübertragungsmechanismus für ein Elektrowerkzeug (100), Folgendes beinhaltend:
- eine Antriebsaufnahmeschnittstelle, welche angeordnet ist, einen Drehantrieb abgebenden Schaft (706) aufzunehmen, welcher mit einem Motor (104; 708) verbunden ist, welcher bedienbar ist, um Drehantrieb an das Elektrowerkzeug (100) zu liefern; und
- eine Antriebslenkungsschnittstelle, angeordnet, um den Drehantrieb auf einen rotierenden Werkzeugkopf (102; 702) zu lenken, angeordnet, um eine Drehkraft auf eine Arbeitsfläche zu applizieren und wiederum, ein der Arbeitsfläche benachbartes Objekt zu beeinflussen; wobei die Antriebsaufnahmeschnittstelle und die Antriebslenkungsschnittstelle miteinander mit einem Rotationssteuerungsmechanismus (300; 704) verbunden sind, welcher angeordnet ist, die Rotation der Antriebsaufnahmeschnittstelle oder der Antriebslenkungsschnittstelle in nur eine Richtung zu steuern, trotz einer Beeinflussungskraft, die durch den Gegenstand auf den rotierenden Werkzeugkopf (102; 702) appliziert wird.

10. Rotationsübertragungsmechanismus für ein Elektrowerkzeug nach Anspruch 9, bei welchem der Rotationssteuerungsmechanismus (300; 704) ein Einrichtungslager ist.

11. Rotationsübertragungsmechanismus für ein Elektrowerkzeug nach Anspruch 10, bei welchem die Antriebslenkungsschnittstelle angeordnet ist, mit der Antriebsaufnahmeschnittstelle in Eingriff zu gehen um den Drehantrieb vom Motor (104; 708) an den rotierenden Werkzeugkopf (102; 702) zu übertragen; und bei welchem wahlweise die Antriebslenkungsschnittstelle angeordnet ist, sich von der Antriebsaufnahmeschnittstelle zu lösen, wenn sie in eine dem Drehantrieb entgegengesetzte Richtung gedreht wird.

12. Rotationsübertragungsmechanismus für ein Elektrowerkzeug nach einem der Ansprüche 9 bis 11, bei welchem, wenn die Antriebslenkungsschnittstelle einer Rotationskraft in eine dem Drehantrieb entgegengesetzte Richtung unterworfen wird, der Rotationssteuerungsmechanismus (300; 704) angeordnet ist, die Rotationskraft in die entgegengesetzte Richtung an der Übertragung an den Antriebsabgabeschaft zu hindern; und bei welchem wahlweise der Rotationssteuerungsmechanismus (300; 704) angeordnet ist, die Rotationskraft in der gegenläufigen Richtung abzubauen.

13. Rotationsübertragungsmechanismus für ein Elektrowerkzeug nach einem der Ansprüche 9 bis 12, bei welchem der Rotationsübertragungsmechanismus für einen Band-Trimmer ist.

14. Verfahren zum Lenken von Rück-Rattern eines Band-Trimmers (100), die folgenden Schritte beinhaltend:
- Übertragen von Drehantrieb von einem Motor (104; 708) an einen rotierenden Werkzeugkopf (102; 702) über einen Rotationssteuerungsmechanismus (300; 704), angeordnet zur Rotation in nur eine Richtung, wobei der rotierenden Werkzeugkopf (102; 702) angeordnet ist, eine Drehkraft auf eine Arbeitsfläche zu applizieren und wiederum, ein der Arbeitsfläche benachbartes Objekt zu beeinflussen, und wobei der Rotationssteuerungsmechanismus (300; 704) angeordnet ist, den rotierenden Werkzeugkopf (102; 702) zum Drehen in nur eine Richtung zu steuern, trotz einer Beeinflussungskraft, die durch den Gegenstand auf den rotierenden Werkzeugkopf (102; 702) appliziert wird.

15. Verfahren zum Lenken von Rück-Rattern eines Band-Trimmers (100) nach Anspruch 14, bei welchem der Rotationssteuerungsmechanismus (300; 704) ein Einrichtungslager ist; und bei welchem wahlweise das Einrichtungslager angeordnet ist, sich zu verriegeln in der Weise, dass Rotation vom Motor (104; 708) zum rotierenden Werkzeugkopf (105; 702) übertragen wird und das zudem angeordnet ist, entgegengesetzten Rotationskräften standzuhalten, denen der Werkzeugkopf (102; 702) ausgesetzt wird.

## Revendications

1. Outil électrique amélioré (100), comprenant :
une tête porte-outil rotative (102 ; 702) agencée de manière à appliquer une force de rotation à une surface de travail et impacter ensuite un objet adjacent à la surface de travail, dans lequel la tête porte-outil rotative (102 ; 702) est entraînée grâce à un moteur (104 ; 708) via un agencement de commande de rotation (300 ; 704) agencé de manière à commander la tête porte-outil rotative (102 ; 702) afin qu'elle tourne dans une direction seulement, en dépit d'une force d'impact appliquée à la tête porte-outil rotative (102 ; 702) par ledit objet.

2. Outil électrique amélioré selon la revendication 1, dans lequel l'agencement de commande de rotation (300 ; 704) est en outre agencé afin de transmettre à la tête porte-outil rotative (102 ; 702) un entraînement rotatif issu du moteur (104 ; 708).

3. Outil électrique amélioré selon la revendication 2, dans lequel l'agencement de commande de rotation (300 ; 704) reçoit l'entraînement rotatif issu du moteur via un arbre d'entraînement (706) agencé pour être en contact rotatif avec le moteur.

4. Outil électrique amélioré selon la revendication 3, dans lequel l'arbre d'entraînement (706) est un arbre d'entraînement flexible.

5. Outil électrique amélioré selon l'une quelconque des revendications précédentes, dans lequel l'agencement de commande de rotation (300 ; 704) inclut un mécanisme à palier unilatéral ; et optionnellement dans lequel le mécanisme à palier unilatéral se trouve dans une position verrouillée lors de la transmission de l'entraînement rotatif de l'arbre d'entraînement (706) à la tête porte-outil rotative (102 ; 702).

6. Outil électrique amélioré selon l'une quelconque des revendications 3, 4 ou 5 lorsqu'elles dépendent de la revendication 3, dans lequel, lorsque la tête porte-outil rotative (102 ; 702) est soumise à une force externe, l'agencement de commande de rotation (300 ; 704) empêche la transmission de la force externe vers l'arbre d'entraînement (706).

7. Outil électrique amélioré selon la revendication 6, dans lequel la force externe est appliquée à la tête porte-outil rotative (102 ; 702) dans une direction opposée à la rotation de la tête porte-outil rotative (102 ; 702) ; et, optionnellement, dans lequel la force externe est dissipée grâce à l'agencement de commande de rotation (300 ; 704).

8. Outil électrique amélioré selon l'une quelconque des revendications précédentes, dans lequel l'outil électrique (100) est un taille-bordure.

9. Mécanisme de transmission de rotation destiné à un outil électrique (100), comprenant :
- une interface de réception d'entraînement agencée pour accueillir un arbre de fourniture d'entraînement rotatif (706) raccordé à un moteur (104 ; 708) servant à fournir un entraînement rotatif à l'outil électrique (100) ; et
- une interface de guidage d'entraînement agencée de manière à guider l'entraînement rotatif vers une tête porte-outil rotative (102 ; 702) agencée de manière à appliquer une force de rotation à une surface de travail et impacter ensuite un objet adjacent à la surface de travail ; dans lequel l'interface de réception d'entraînement et l'interface de guidage d'entraînement sont raccordées ensemble par un mécanisme de commande de rotation (300 ; 704) agencé de manière à commander la rotation de l'interface de réception d'entraînement ou de l'interface de guidage d'entraînement dans une seule direction, en dépit d'une force d'impact appliquée à la tête porte-outil rotative (102 ; 702) par ledit objet.

10. Mécanisme de transmission de rotation pour un outil électrique selon la revendication 9, dans lequel le mécanisme de commande de rotation (300 ; 704) est un palier unilatéral.

11. Mécanisme de transmission de rotation pour un outil électrique selon la revendication 10, dans lequel l'interface de guidage d'entraînement est agencée de manière à être en prise avec l'interface de réception d'entraînement afin de transmettre l'entraînement rotatif du moteur (104 ; 708) vers la tête porte-outil rotative (102 ; 702) ; et optionnellement, dans lequel l'interface de guidage d'entraînement est agencée de manière à venir hors de prise par rapport à l'interface de réception d'entraînement lorsqu'on la fait tourner dans une direction opposée à l'entraînement rotatif.

12. Mécanisme de transmission de rotation pour un outil électrique selon l'une quelconque des revendications 9 à 11, dans lequel, lorsque l'interface de guidage d'entraînement est soumise à une quelconque force de rotation dans une direction opposée à l'entraînement rotatif, le mécanisme de commande de rotation (300 ; 704) est agencé de manière à empêcher la force de rotation dans la direction opposée d'être transmise vers l'arbre de fourniture d'entraînement rotatif; et, optionnellement, dans lequel le mécanisme de commande de rotation (300 ; 704) est agencé de manière à dissiper la force de rotation dans la direction opposée.

13. Mécanisme de transmission de rotation pour un outil électrique selon l'une quelconque des revendications 9 à 12, dans lequel le mécanisme de transmission de rotation est destiné à un taille-bordure.

14. Procédé de gestion du retour de secousse pour un taille-bordure (100), comprenant les étapes consistant à :
- transmettre un entraînement rotatif d'un moteur (104 ; 708) à une tête porte-outil rotative (102 ; 702) via un mécanisme de commande de rotation (300 ; 704) agencé de manière à tourner dans une seule direction, dans lequel la tête porte-outil rotative (102 ; 702) est agencée de manière à appliquer une force de rotation à une surface de travail et impacter ensuite un objet adjacent à la surface de travail, et dans lequel le mécanisme de commande de rotation (300 ; 704) est agencé de manière à commander la tête porte-outil rotative (102 ; 702) afin qu'elle tourne dans une seule direction en dépit d'une force d'impact appliquée à la tête porte-outil rotative (102 ; 702) par ledit objet.

15. Procédé de gestion du retour de secousse pour un taille-bordure (100) selon la revendication 14, dans lequel le mécanisme de commande de rotation (300 ; 704) est un palier unilatéral ; et, optionnellement, dans lequel le palier unilatéral est agencé de manière à se verrouiller afin de transmettre une rotation du moteur (104 ; 708) à la tête porte-outil rotative (105 ; 702) et est en outre agencé de manière à résister à des forces de rotation contraires subies par la tête porte-outil (102 ; 702).
